# EUROPÄISCHE PATENTSCHRIFT

(11) **EP 0 806 317 B1**
(45) Veröffentlichungstag und Bekanntmachung des Hinweises auf die Patenterteilung: **31.03.1999**
(21) Anmeldenummer: 97106860.6
(22) Anmeldetag: 25.04.1997
(51) Int. Cl.: B60K 15/05

(54) **Tankklappe mit integrierter Aufspringmechanik**
Tank inlet cover with integrated opening spring mechanism
Volet de réservoir avec mécanisme à ressort d'ouverture intégré

(30) Priorität: 08.05.1996 DE 29608315 U
(43) Veröffentlichungstag der Anmeldung: 12.11.1997
(73) Patentinhaber: ED. SCHARWÄCHTER GmbH & Co. KG, D-42809 Remscheid (DE)
(72) Erfinder: Kalckert, Hans-Peter, Dipl.-Ing., 42859 Remscheid (DE)
(74) Vertreter: Schön, Theodor, Patent- und Zivilingenieur

(56) Entgegenhaltungen:
- WO-A-91/19071
- DE-A- 3 212 689
- DE-U- 7 328 516
- US-A- 4 527 825
- US-A- 4 971 382

## Beschreibung

Die Erfindung betrifft eine Tankklappe mit integrierter Aufspringmechanik für Kraftfahrzeuge, insbesondere derjenigen Bauart, bei welcher eine Tankklappe vermittels eines Scharnierarmes und eines Scharnierstiftes in einem am Rand einer Karosseriemulde befestigten Lagerbock schwenkbar gelagert und in ihrer Schließlage mittels einer Verschlußeinrichtung gehalten sowie in Öffnungsrichtung mit einer ständig wirkenden Federlast beaufschlagt ist, wobei die in Öffnungsrichtung wirkende Federlast durch eine gegen den Lagerbock abgestützte Formfeder aufgebracht wird.

Personenkraftwagen weisen in der Regel Tankklappen auf, die eine Öffnung per Hand durch eine Griffmulde in Karosserie oder Tankklappe ermöglichen. Anstelle von Griffmulden kommt auch eine Öffnung der Tankklappe über einen Drehpunkt mittels eines bestimmten Druckpunkts unter Ausnutzung des Wipp-Prinzipes in Frage. Bei Fahrzeugen mit Zentralverriegelung wird die Tankklappe häufig im Schließsystem integriert und bei Öffnung des Fahrzeuges entriegelt. Die Öffnung der Tankklapppe erfolgt bei Bedarf von Hand. Wird die Tankklappe nicht verschlossen, wird eine Sicherung des Tankes durch einen abschließbaren Tankverschluß gewährleistet. Des Weiteren gibt es die Möglichkeit Tankklappen per Fernentriegelung zu öffnen. Dies geschieht meistens über ein Zugseil aus dem Fahrgastraum heraus. Bei Betätigung springt die Klappe in der Regel ein Stück auf. Die vollständige Öffnung muß anschließend von Hand erfolgen.
Bei einer beispielsweise aus der DE-OS 32 12 689 bekannten Anordnung für eine Tankklappenanordnung ist die an ihrem einen Ende vermittels eines in einer Mulde angeordneten Lagerbockes schwenkbar an der Fahrzeugkarosserie gelagerte Tankklappe an ihrem anderen Ende über eine fernsteuerbar auslösbare Zuhaltung in ihrer Schließlage gehalten und in Öffnungsrichtung mit einer durch eine Blattfeder aufgebrachten Federlast beaufschlagt. Die Anlenkung der Tankklappe umfaßt hierbei einem die Tankklappe mit dem Lagerbock verbindende, jeweils im Bereich eines seiner Enden ein Lagerauge der Tankklappe und ein Lagerauge in einem Tragarm des Lagerbockes durchgreifenden Scharnierstift, welcher zur Ausbildung einer Aufspringmechanik im Bereich zwischen den beiden Tragarmen des Lagerbockes als Kurbel-welle ausgebildet und über einen ersten Kurbelarm an der Tankklappe festgelegt und über einen zweiten Kurbelarm mit der ihrerseits gegen den Lagerbock bzw. die Fahrzeugkarosserie abgestützten Blattfeder verbunden ist, wobei die beiden Kurbelarme des Scharnierstiftes derart gegeneinander verschränkt sind, daß die Tankklappe in Öffnungsrichtung zumindest bis zum Erreichen einer Teilöffnungslage mit einer Federlast beaufschlagt ist. Derartige Tankklappenanordnungen sind zunächst grundsätzlich nur dort anwendbar, wo die Tragarme des Lagerbockes einen für eine Ausbildung des Scharnierstiftes als Kurbel-welle hinreichenden Abstand voneinander aufweisen und erfordern darüber hinaus eine besondere Abstützung für die zugleich auch den mechanischer Öffnungsendanschlag für die Tankklappe bildende Blatt-feder am Lagerbock der Tankklappenlagerung. Besonders nachteilig an derartig ausgebildeten Tankklappenanordnungen ist jedoch der Um-stand, daß die dort verwendeten Blattfederanordnungen bezüglich der Tankklappe zwar ein gewisses Drehmoment in Öffnungsrichtung erzeugen, eine definierte Öffnungsendstellung aber ebensowenig sicherstellen können, wie eine für einen geräuschlosen Fahrbetrieb erforderliche Feststellkraft in der Schließlage.
Für die Aufspringfunktion werden bisher somit immer gesonderte Bauteile eingesetzt.

Der Erfindung liegt die Aufgabe zugrunde, ausgehend von einer Tankklappenanordnung nach der eingangs genannten Bauart eine Integration der gesonderten Bauteile in die Scharniermechanik zu ermöglichen.

Diese Aufgabe wird erfindungsgemäß dadurch gelöst, daß die Formfeder durch eine im Wesentlichen U-förmige Blattfeder gebildet ist und vermittels eines in eine in ihrem Profilgrund ausgebildete Raste, welche zwischen den Federschenkeln angeordnet ist, eingreifenden, durch den einen Schenkel eines insgesamt als U-förmiges Element ausgebildeten Scharnierstiftes gebildeten radialen Auslegers mit dem Scharnierarm der Tankklappenanlenkung in Mitnehmeverbindung steht, wobei die Blattfeder über einen einen ersten Hebel bildenden und Druckkräfte erzeugenden Federschenkel gegen den Lagerbock der Schwenklagerung der Tankklappe abgestützt ist und über einen zweiten, eine Vorspanneinrichtung für den ersten Hebel bildenden Federschenkel am Scharnierarm anliegt und wobei die Länge des ersten, Druckkräfte erzeugenden Hebels und der Abstand des Eingriffes des Auslegers des Scharnierstiftes zur Raste im Profilgrund der Blattfeder dem für die Aufspringwirkung der Tankklappe erforderlichen Drehmoment entsprechend bemessen sind und die Ausrichtung des Auslegers des Scharnierstiftes zusammen mit der Ausrichtung des ersten Federschenkels der Blattfeder eine Übertotpunktanordnung bildet.

Vorteil dessen ist die kompaktere Bauweise einer Tankklappe mit automatischer Aufspringfunktion. Ein wesentliches Qualitätsmerkmal ist hierbei der definierte Öffnungs- winkel bei Entriegelung und die dortige Verharrung. Herkömmliche Tankklappen springen bei Entriegelung lediglich auf, und sind bis zum Nennöffnungswinkel in einer undefinierten Lage. Die mehrfache Funktionsbelegung eines Bauteiles wirkt sich positiv auf die Herstellkosten aus. Der Montageaufwand der Tankklappe wird ebenfalls reduziert.

Die Tankklappe mit integrierter Aufspringmechanik vereint mehrere Funktionen in sich ohne zusätzliche Bauteile. Bei herkömmlichen Tankklappen kommt meist ein Scharnier zum Einsatz mit definiertem Anschlag für den Öffnungswinkel, wobei eine Blattfeder in den Endstellungen bestimmte Druckkräfte erzeugt. Im mittleren Öffnungswinkel besitzt die Feder einen Umkehrpunkt, so daß im geöffneten und geschlossenen Zustand die notwendigen Drehmomente erreicht werden. In geschlossener Position ist ein bestimmtes Drehmoment für einen geräuschlosen Fahrbetrieb erforderlich.
- Fig. 1:: eine Vereinfachte 3D-Darstellung einer Tankklappe mit integrierter Aufspringmechanik;
- Fig. 2:: eine Draufsicht auf eine Tankklappe gemäß Figur 1;
- Fig. 3a und 3b:: eine Wirkungsweisendarstellung der Feder bei in entriegeltem Zustand befindlicher Tankklappe;
- Fig. 4:: eine Wirkungsweisendarstellung der Feder bei in geschlossenem Zustand befindlicher Tankklappe.

Die in der Zeichnung dargestellte Tankklappe (5) mit integrierter Aufspringmechanik ist vermittels eines Scharnierarmes (4) und eines Scharnierstiftes (2a) in einem am Rand einer nicht gezeigten Karosseriemulde befestigten Lagerbock (3) schwenkbar gelagert und mittels einer nur andeutungsweise dargestellten Verschlußeinrichtung (6) in ihrer Schließlage gehalten. In Öffnungsrichtung ist die Tankklappe (5) mit einer ständig wirkenden Federlast beaufschlagt, welche von einer gegen den Lagerbock (3) abgestützten, durch eine im Wesentlichen U-förmige Blattfeder gebildete Formfeder (1a,1b) aufgebracht wird. Die Formfeder (1a,1b) steht vermittels eines in eine in ihrem Profilgrund zwischen den Federschenkeln (1a und 1b) angeordnet Raste, eingreifenden, den einen Schenkel (2b) eines insgesamt als U-förmiges Element ausgebildeten Scharnierstiftes (2a) gebildeten radialen Auslegers (2b) mit dem Scharnierarm (4) der Tankklappenanlenkung in Mitnehmeverbindung. Die Blattfeder (1a,1b) ist dabei über einen einen ersten Hebel bildenden und Druckkräfte erzeugenden Federschenkel (1a) gegen den Lagerbock (3) der Schwenklagerung der Tankklappe (5) abgestützt und liegt über einen zweiten, eine Vorspanneinrichtung für den ersten Federschenkel (1a) bildenden Federschenkel (1b) am Scharnierarm (4) an. Die Ausrichtung des Auslegers (2b) des Scharnierstiftes (2a) bildet zusammen mit der Ausrichtung des ersten Federschenkels (1a) der Blattfeder eine Übertotpunktanordnung.

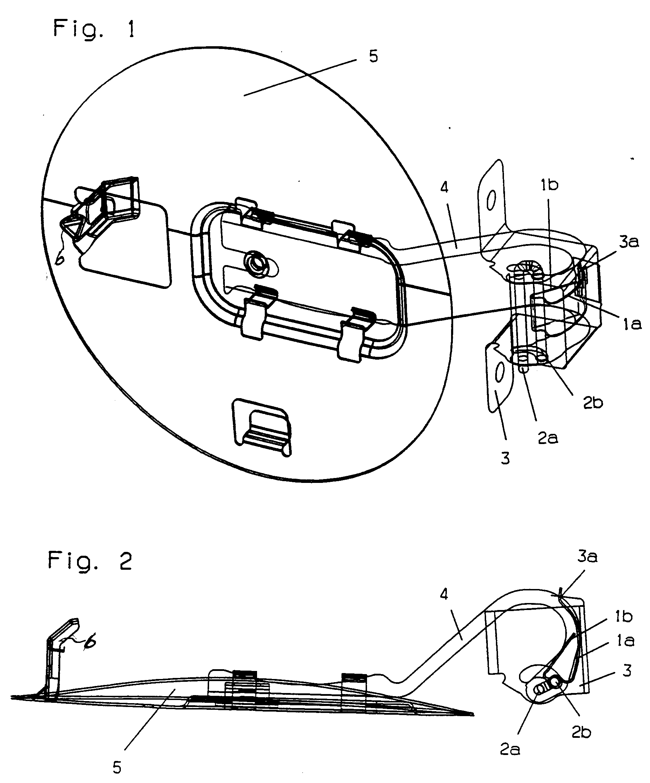

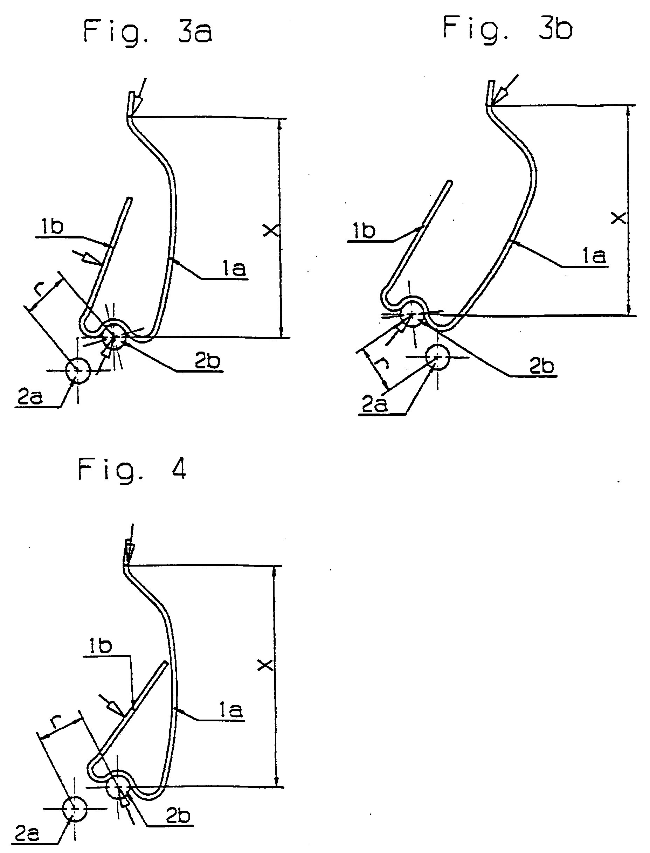

Gemäß Fig. 2 der vorliegenden Zeichung wird die Vorspannung der Formfeder (1a,1b) durch den Einspannpunkt (3a) und den Ausleger (2b) über den Federschenkel (1b) erhöht, wie dies in den Figuren 3+4 näher dargestellt ist. Der Federschenkel (1b) kann als Biegeschenkel mit einer elastischen Einspannung betrachtet werden. Der Federschenkel (1a) erzeugt vorwiegend Druckkräfte, zwischen dem Ausleger (2b) und Einspannpunkt (3a), und kann als Druckstab bezeichnet werden. Dies macht die unterschiedlichen Funktionen der beiden Federschenkeln deutlich. Der Federschenkel (1b) wird im geschlossenen Tankklappenzustand durch den Scharnierarm (4) um den Aufspringwinkel α (sh. Fig. 4) deformiert. Diese zusätzliche Vorspannung bewirkt die gewünschte Aufspringfunktion bei Entriegelung der Tankklappe um einen definierten Winkel. Die entsprechende Abstimmung der Maße x, r sowie der Feder und der Scharnierreibung nach der Lackierung verhindert die vollständige Klappenöffnung durch Entriegelung. Der hier zum Einsatz kommende, insgesamt als U-förmiges Element ausgebildete Scharnierstifte (2) dient mit seiner einen Hälfte als Verbindungselement (Scharnierachse) zwischen Karosserieteil (3) und Scharnierarm (4) und bildet mit dem Ausleger (2b) eine Schwenkachse für die Formfeder (1a,1b).
In der Fig. 3a und 3b sind die auf die Formfeder (1a,1b) wirkenden Kräfte im entriegelten Zustand dargestellt. Die Federspannung im Federschenkel (1a) verursacht eine Drehbewegung der Tankklappe (5) in Richtung des Federschenkels (1b) dies entspricht der Schließrichtung. Die gegenseitige Abstützung des Scharnierarmes (4) und des Federschenkels (1b) führt zu einem stabilen Öffnungswinkel.
In der Fig. 4 sind schematisch die wirkenden Kräfte auf die Formfeder (1a,1b) in geschlossenem Zustand der Tankklappe (5), welcher zugleich der Einbauzustand ist, dargestellt.
Die Kraft F am Federschenkel (1a) ist für die Deformation des Federschenkels (1b) um den Winkel α verantwortlich. Diese Vorspannung bewirkt bei Entriegelung eine selbständige Öffnung um den Winkel α.

## Patentansprüche

1. Tankklappe mit integrierter Aufspringmechanik, welche vermittels eines Scharnierarmes (4) und eines Scharnierstiftes (2a) in einem am Rand einer Karosseriemulde befestigten Lagerbock (3) schwenkbar gelagert und in ihrer Schließlage mittels einer Verschlußeinrichtung gehalten sowie in Öffnungsrichtung mit einer ständig wirkenden Federlast beaufschlagt ist, wobei die in Öffnungsrichtung wirkende Federlast durch eine gegen den Lagerbock (3) abgestützte Formfeder (1a,1b) aufgebracht wird, **dadurch gekennzeichnet**, daß die Formfeder (1a,1b) durch eine im Wesentlichen U-förmige Blattfeder gebildet ist und vermittels eines in eine in ihrem Profilgrund ausgebildete Raste, welche zwischen den Federschenkeln angeordnet ist, eingreifenden, durch den einen Schenkel eines insgesamt als U-förmiges Element ausgebildeten Scharnierstiftes (2a) gebildeten radialen Auslegers (2b) mit dem Scharnierarm (4) der Tankklappenanlenkung in Mitnehmeverbindung steht, wobei die Blattfeder (1a,1b) über einen einen ersten Hebel bildenden und Druckkräfte erzeugenden Federschenkel (1a) gegen den Lagerbock (3) der Schwenklagerung der Tankklappe (5) abgestützt ist und über einen zweiten, eine Vorspanneinrichtung für den ersten Hebel bildenden Federschenkel (1b) am Scharnierarm (4) anliegt und wobei die Länge des ersten, Druckkräfte erzeugenden Hebels und der Abstand des Eingriffes des Auslegers (2b) des Scharnierstiftes (2a) zur Raste im Profilgrund der Blattfeder (1a, 1b) dem für die Aufspringwirkung der Tankklappe (5) erforderlichen Drehmoment entsprechend bemessen sind und die Ausrichtung des Auslegers (2b) des Scharnierstiftes (2a) zusammen mit der Ausrichtung des ersten Federschenkels (1a) der Blattfeder eine Übertotpunktanordnung bildet.

## Claims

1. Tank flap with integrated opening spring mechanism, which is mounted to tilt by means of a hinge arm (4) and a hinge pin (2a) in a bearing block (3) fastened to the edge of a bodywork recess and is held in its closed position by means of a locking device and is acted upon in the opening direction by a permanently acting spring load, the spring load acting in the opening direction being applied by a shaped spring (1a, 1b) supported against the bearing block (3), characterised in that the shaped spring (1a, 1b) is formed by a substantially U-shaped leaf spring and by means of a radial cross-piece (2b) engaging in a notch formed in its profile base, which is located between the spring legs, the said cross-piece being formed by one leg of a hinge pin (2a) constructed in general as a U-shaped member, is in entrainment connection with the hinge arm (4) of the tank flap pivot, the leaf spring (1a, 1b) being supported against the bearing block (3) of the swivel mounting of the tank flap (5) by way of a spring leg (1a) forming a first lever and producing compressive forces and bearing against the hinge arm (4) by way of a second spring leg (1b) forming a pre-tensioning device for the first lever and the length of the first lever producing compressive forces and the spacing of the engagement of the cross-piece (2b) of the hinge pin (2a) from the notch in the profile base of the leaf spring (1a, 1b) being dimensioned to correspond to the torque necessary for the springing-open action of the tank flap (5) and the alignment of the cross-piece (2b) of the hinge pin (2a) together with the alignment of the first spring leg (1a) of the leaf spring forming an over dead centre arrangement.

## Revendications

1. Volet de réservoir avec un mécanisme d'ouverture intégré à ressort, qui est articulé par l'intermédiaire d'un bras de charnière (4) et d'une cheville de charnière (2a) sur un support (3) fixé sur le bord d'un creux dans la carrosserie, qui est maintenu en position de fermeture par un dispositif de fermeture et qui subit en direction de l'ouverture la pression permanente d'un ressort préformé (1a), (1b) s'appuyant sur le support (3) *caractérisé en ce que* le ressort préformé (1a), (1b) est constitué d'un ressort-lame sensiblement en forme de U et coopère avec le bras de charnière (4) de l'articulation du volet de réservoir par l'intermédiaire d'un bras radial (2b) qui est constitué d'une des branches de la cheville d'une charnière (2a) en forme de U et qui s'engage dans un cran d'arrêt formé dans le fond du profilé du ressort et disposé entre les branches du ressort, *en ce que* le ressort-lame (1a), (1b) s'appuie, par l'une de ses branches (1a) formant un premier lever et produisant les forces de pression, sur le support (3) de l'articulation du volet de réservoir (5), et, par son autre branche (1b) formant un dispositif de précontrainte pour le premier lever, sur le bras de charnière (4) et *en ce que* la longueur du premier levier produisant les forces de pression et la distance entre d'une part le point d'engagement du bras (2b) de la cheville de charnière (2a) et d'autre part le cran d'arrêt dans le fond du profilé du ressort-lame (1a), (1b) sont dimensionnées pour correspondre au couple de rotation nécessaire pour provoquer l'ouverture du volet de réservoir (5), l'orientation du bras (2b) de la cheville de charnière (2a) formant ensemble avec l'orientation de la première branche (1a) du ressort-lame une position dépassant le point mort.
